# EUROPEAN PATENT SPECIFICATION

(11) **EP 4 055 835 B1**
(45) Date of publication and mention of the grant of the patent: **21.08.2024**
(21) Application number: 19804664.1
(22) Date of filing: 08.11.2019
(51) Int. Cl.: H04R 5/02, B60N 2/879, B60R 11/02, B60R 11/00, H04R 1/06

(54) **LOUDSPEAKER ARRANGEMENT**
LAUTSPRECHERANORDNUNG
AGENCEMENT DE HAUT-PARLEUR

(43) Date of publication of application: 14.09.2022
(73) Proprietor: Harman Becker Automotive Systems GmbH, 76307 Karlsbad (DE)
(72) Inventor: TAMSIR, Ruslin, Cyberjaya, 63000 (MY); PODLOCZ, Peter, 4029 Debrecen (HU)
(74) Representative: Westphal, Mussgnug & Partner, Patentanwälte mbB
(86) International application number: PCT/EP2019/080703
(87) International publication number: WO 2021/089171

(56) References cited:
- WO-A1-2017/160594
- WO-A1-98/52289
- FR-A1- 2 768 100

## Description

### TECHNICAL FIELD

The disclosure relates to a loudspeaker arrangement, in particular to a loudspeaker arrangement inside a vehicle.

### BACKGROUND

Vehicles today usually have a music system comprising a plurality of loudspeakers. Loudspeakers may be installed, e.g., in a headrest or mounted on a wall or panel in a passenger compartment of the vehicle. As the loudspeakers in such cases are arranged distant to other components such as the corresponding playback (music) system, as well as any controlling devices (e.g., head unit or control unit), a considerable number of cables leading from a control unit to the loudspeakers are needed. The design of a headrest that can accommodate a loudspeaker enclosure, therefore, may be large and complicated.

Document WO 98/52289 A1 discloses a loudspeaker system for a passenger vehicle such as an automobile. The system comprises a transducer capable of being excited by applied electric potential and electronic means that is electrically connected to the transducer to apply electric potential thereto. The diaphragm driven by the excited transducer is comprised of the trim panel of the vehicle.

Document WO 2017/160594 A1 discloses a technology that can be embodied in a headrest of a seat, the headrest including an enclosure for housing one or more acoustic transducers, and an adjustable headrest wing disposed in front of the enclosure. The headrest wing is coupled to the enclosure by a pivot, and configured to be adjusted to one of multiple positions within an angle range around the pivot. The headrest wing is also configured to support the head of a seat-occupant. The headrest further includes a connector disposed between the enclosure and a rear portion of the headrest wing. The connector is configured to provide an acoustic channel between the enclosure and the headrest wing such that audio signals from the one or more acoustic transducers are radiated outward through the headrest wing.

### SUMMARY

A loudspeaker arrangement includes a frame including at least two mounting fixtures and a connecting element, wherein the connecting element connects the at least two mounting fixtures to each other. The loudspeaker arrangement further includes at least two loudspeakers, wherein each of the at least two loudspeakers is arranged in a different one of the at least two mounting fixtures. The loudspeaker arrangement further includes an amplifier configured to amplify audio signals to be reproduced by the at least two loudspeakers, wherein the amplifier is mechanically coupled to the connecting element between the at least two mounting fixtures. The connecting element is a flat connecting piece extending in a horizontal plane between the at least two mounting fixtures. Each of the at least two mounting fixtures is configured to form a casing for one of the at least two loudspeakers. The at least two mounting fixtures extend from a first side of the connecting element in a vertical direction, and the amplifier is arranged on a second side of the connecting element, the second side being opposite to the first side.

Other systems, methods, features and advantages will be or will become apparent to one with skill in the art upon examination of the following detailed description and figures. It is intended that all such additional systems, methods, features and advantages be included within this description, be within the scope of the invention and be protected by the following claims.

### BRIEF DESCRIPTION OF THE DRAWINGS

The arrangement may be better understood with reference to the following description and drawings. The components in the figures are not necessarily to scale, emphasis instead being placed upon illustrating the principles of the invention. Moreover, in the figures, like referenced numerals designate corresponding parts throughout the different views.
Figure 1 schematically illustrates in a top view an example of a loudspeaker arrangement.
Figure 2 schematically illustrates in a side view an example of a loudspeaker arrangement.
Figure 3 schematically illustrates in a three-dimensional view another example of a loudspeaker arrangement.
Figure 4 schematically illustrates in a top view the exemplary loudspeaker arrangement of Figure 3.
Figure 5 schematically illustrates in a three-dimensional view the rear side of the exemplary loudspeaker arrangement of Figure 3.
Figure 6 schematically illustrates in a side view the exemplary loudspeaker arrangement of Figure 3.
Figure 7 schematically illustrates in a side view a car seat with an exemplary loudspeaker arrangement mounted in the headrest.
Figure 8 schematically illustrates in a front view a car seat with an exemplary loudspeaker arrangement mounted in the headrest.
Figure 9 schematically illustrates in an exploded view another example of a loudspeaker arrangement.

### DETAILED DESCRIPTION

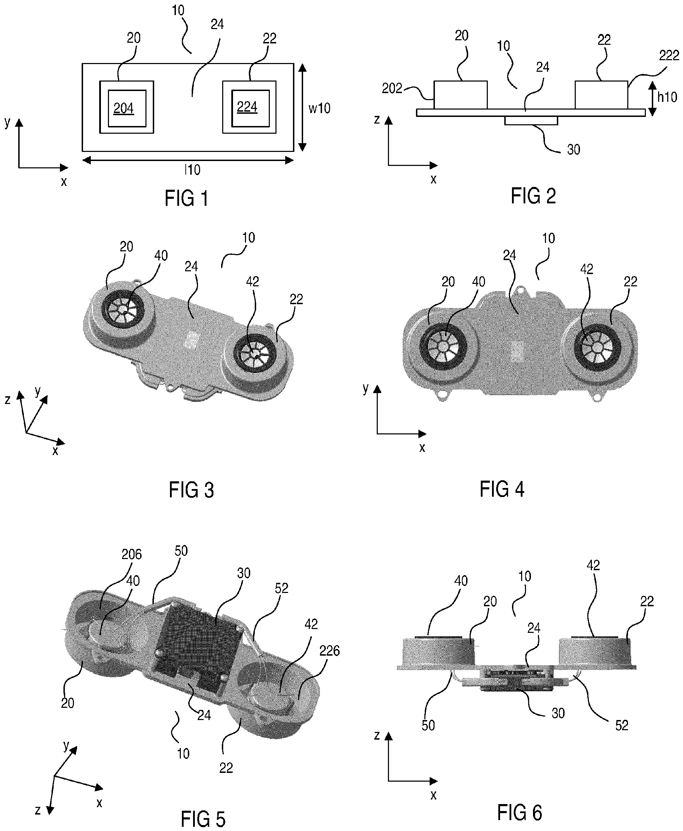

Referring to Figure 1, a loudspeaker arrangement is schematically illustrated. The loudspeaker arrangement comprises a frame 10. The frame 10 comprises at least two mounting fixtures 20, 22 and a connecting element 24. Each of the at least two mounting fixtures 20, 22 is configured to receive a loudspeaker. The at least two mounting fixtures 20, 22 are connected by the connecting element 24 which extends in a horizontal plane (x-y) between the at least two mounting fixtures 20, 22. Each of the at least two mounting fixtures 20, 22 may have a square, a rounded, an oval or a polygonal cross-section. In the example illustrated in the Figures and described below, the at least two mounting fixtures 20, 22 have a rounded cross-section.

Each mounting fixture 20, 22 comprises circumferential sidewalls 202, 222 (see, e.g., Figure 2). The sidewalls 202 222 extend from a first side of the connecting element 24 in a vertical direction z. The sidewalls 202, 222 form a casing that is configured to receive a loudspeaker. Each of the mounting fixtures 20, 22 is open towards the vertical direction z on both sides. That is, each mounting fixture 20, 22 comprises a first opening 204, 224 on a front side of the loudspeaker arrangement, that is, on the first side of the connecting element 24. Each mounting fixture 20, 22 further comprises a second opening 206, 226 on a rear side of the loudspeaker arrangement, that is, towards a second side of the connecting element 24, the second side being opposite to the first side.

The connecting element 24 may be a flat connection piece extending in a horizontal plane (x-y) between the mounting fixtures 20, 22. That is, the connecting element 24 may have the form of a connection plate or panel. The connecting element 24 may have a thickness in the vertical direction z which is significantly smaller than its length and width in a first and second horizontal directions x, y.

Now referring to Figure 3, the loudspeaker arrangement further comprises at least two loudspeakers 40, 42. Each of the at least two loudspeakers 40, 42 is arranged in a different one of the at least two mounting fixtures 20, 22. That is, each loudspeaker 40, 42 is enclosed at least horizontally by one of the mounting fixtures 20, 22, in particular by the circumferential sidewalls 202, 222 of the respective mounting fixture 20, 22.

The loudspeaker arrangement further comprises an amplifier 30. The amplifier 30 is mechanically coupled to the frame 10. In particular, the amplifier 30 is arranged on and connected to the second side of the connecting element 24. Thus, while the mounting fixtures 20, 22 with the loudspeakers 40, 42 arranged therein extend from the first side of the connecting element 24, the amplifier 30 extends from the second side of the connecting element 24, that is, the amplifier extends in an opposite direction as compared to the mounting fixtures 20, 22. This, however, is only an example. Generally, it is also possible that the amplifier 30 is arranged on and connected to the first side of the connecting element 24 between the at least two mounting fixtures 20, 22. However, as will become apparent from the description below, arranging the amplifier 30 on and connected to the second side allows to electrically couple the amplifier 30 to the at least two loudspeakers 40, 42 in an easy and space-saving manner. The amplifier 30 is electrically coupled to each of the at least two loudspeakers 40, 42. The amplifier 30 is configured to amplify an audio signal that is to be played by the at least two loudspeakers 40, 42. The audio signal may be received by the amplifier 30 from a sound system that is arranged distant from the loudspeaker arrangement.

While Figure 3 schematically illustrates a three-dimensional view of an exemplary loudspeaker arrangement, Figure 4 schematically illustrates a top view, Figure 5 schematically illustrates another three-dimensional view illustrating a back-side (second side) of the loudspeaker arrangement, and Figure 6 schematically illustrates a side view of the exemplary loudspeaker arrangement. In Figures 3 and 4, a top part, e.g., a loudspeaker grille, of each of the at least two loudspeakers 40, 42 is visible through the first openings 204, 224. The remaining parts of the at least two loudspeakers 40, 42 are not visible in these views, as they are hidden behind the corresponding mounting fixtures 20, 22. In Figure 5, a back side of the at least two loudspeakers 40, 42 is visible through the second openings 206, 226 of the at least two mounting fixtures on the rear side of the loudspeaker arrangement. Cables or wiring harnesses 50, 52 are used to provide an electrical connection between the at least two loudspeakers 40, 42 and the amplifier 30. If the amplifier 30 is arranged on the rear side (second side) of the connecting element 24, the cables or wiring harnesses 50, 52 may be easily led from the amplifier 30 through the second openings 206, 226 to the respective loudspeakers 40, 42.

As can be seen from the example illustrated in Figures 3 to 6, the loudspeaker arrangement may be implemented in a very compact way. The main components, that is the at least two loudspeakers 40, 42 and the amplifier 30 are all mounted to the frame 10. The wiring harnesses 50, 52 that are used to electrically couple the loudspeakers 40, 42 to the amplifier 30 are comparably short. That is, a length of each of the wiring harnesses 50, 52 between one of the loudspeakers 40, 42 and the amplifier 30 may be less than 30cm, less than 20cm or even less than 10cm, for example. Each wiring harness 50, 52 may comprise at least two separate cables. Such cables may be used to provide the loudspeakers 40, 42 with power and to provide the audio signal to the loudspeakers 40, 42. An additional wiring harness (not specifically illustrated) is may be used to electrically couple the amplifier to a sound system. However, such an additional wiring harness may only comprise a limited number of cables. Therefore, even if a length of such an additional wiring harness connecting the amplifier 30 to a sound system is comparably long, e.g., greater than 1m, greater than 2m, or even greater than 3m, not much space is needed to arrange the wiring harness between the sound system and the loudspeaker arrangement within the vehicle.

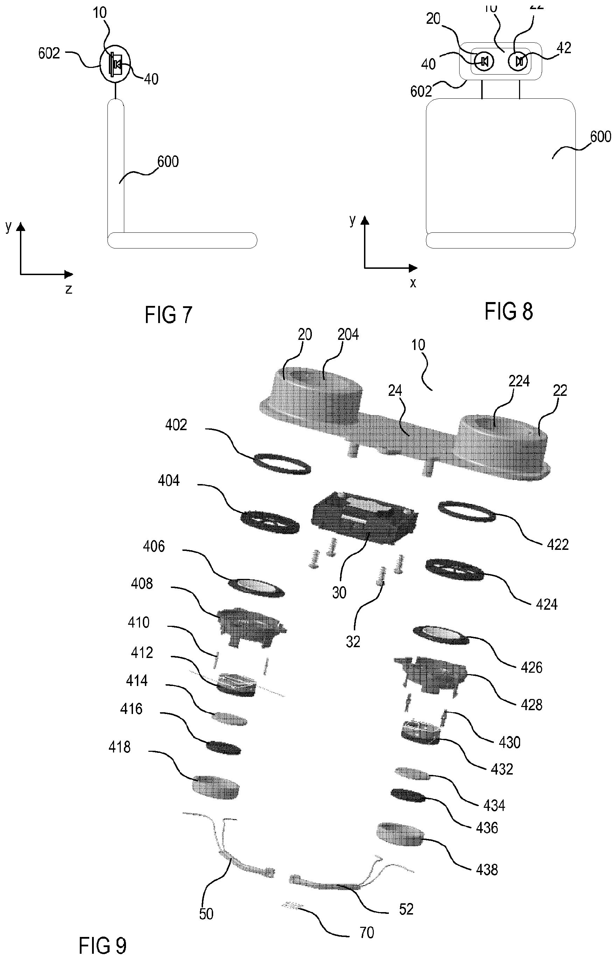

As has been mentioned above, the loudspeaker arrangement may be arranged in a headrest 602 of a vehicle, for example. Figure 7 schematically illustrates a side view of a car seat 600 comprising a headrest 602, with a loudspeaker arrangement mounted within the headrest. In this way, sound (e.g., music, speech, warning signals, etc.) may be output in direct proximity to a user's ears. The at least two loudspeakers 40, 42 are arranged at a certain distance from each other such that a first one of the at least two loudspeakers 40 may radiate sound primarily to a first ear of the user, and a second one of the at least two loudspeakers 42 may radiate sound primarily to a second ear of the user. The distance between the loudspeakers 40, 42 is set by the dimensions of the connecting element 24, which defines a distance between the mounting fixtures 20, 22 and, therefore, between the loudspeakers 40, 42. Figure 8 schematically illustrates a front view of the arrangement of Figure 7. In this front view the arrangement of the loudspeakers 40, 42 close to the positions of a user's ears can be clearly seen.

Now referring to Figure 9, an exploded view of an exemplary loudspeaker arrangement is schematically illustrated. The frame 10 including the at least two mounting fixtures and the connecting element 24 essentially corresponds to the frame as illustrated in Figures 3 to 6. As can be seen in Figure 9, the amplifier 30 may be mounted on the frame by means of fastening elements 32. Such fastening elements 32 may comprise one or more screws (see Figure 9), or at least one bracket (not specifically illustrated), for example. Any other suitable fastening elements 32 are generally possible. According to another example, the amplifier 30 may be glued to the frame 10 by means of an adhesive layer (not illustrated).

In Figure 9, different components forming the at least two loudspeakers 40, 42 are illustrated in greater detail. The components illustrated in Figure 9, however, are only examples. The loudspeakers 40, 42 may comprise additional components, some of the described components may be omitted or some of the described components may be replaced by alternative components. Each loudspeaker 40, 42 in the example of Figure 9 comprises a front gasket 402, 422 and a loudspeaker grille 404, 424. The first opening of each of the at least two mounting fixtures 20, 22 may be covered by the loudspeaker grille 404, 424 of one of the at least two loudspeakers 40, 42, for example. That is, when the loudspeakers 40, 42 are mounted in the mounting fixtures 20, 22, the first opening 204, 224 may be covered by the grille 404, 424, while the second opening 206, 226 may remain open. Each loudspeaker 40, 42 further comprises a loudspeaker dome 406, 426 that, at its perimeter, may be surrounded by a foam material. Each loudspeaker 40, 42 may further comprise a loudspeaker basket 408, 428, a voice coil 412, 432, as well as terminals 410, 430 configured to connect the voice coil 412, 432 to the respective loudspeaker basket 408, 428. Each loudspeaker 40, 42 further comprises a core cap 414, 434 and a magnet 416, 436, as well as a shell pot 418, 438. Figure 9 also illustrates the wiring harnesses 50, 52 that have already been described above. The frame 10 may further be labeled by affixing a label 70 to the connecting element 24, for example. The label 70 may provide information on the manufacturer and the model of the loudspeaker arrangement, for example. The described components may form a conventional loudspeaker. Any other suitable kind of loudspeaker, however, may be used instead.

The loudspeaker arrangement as described above provides a very compact construction. The loudspeaker arrangement may be arranged in a headrest 602 of a vehicle, for example, or anywhere else within the vehicle. If the loudspeaker arrangement is arranged distant from a sound system of the vehicle, only a limited number or wire connections is required in order to electrically couple the loudspeaker arrangement to the sound system. The number of wire connections is greatly reduced due to the compact arrangement in which the amplifier is arranged close to the loudspeakers 40, 42. If instead the amplifier was arranged distant from the loudspeaker arrangement (e.g., loudspeakers arranged in headrest and amplifier arranged close to sound system), the required number of wire connections would be significantly larger. Distant from the loudspeaker arrangement in this context refers to a distance of at least 50cm, at least 1m, or at least 2m between the loudspeakers and the amplifier. Laying cables between the sound system of a vehicle and loudspeakers arranged in a headrest 602 of the vehicle is generally challenging, as there are only comparatively small connecting elements connecting the headrest to the car seat. That is, it is generally not possible to lay a large number of cables from a sound system to loudspeakers 40, 42 in a head rest of the vehicle.

The at least two loudspeakers 40, 42 are received by the mounting fixtures 20, 22 of the frame 10. The amplifier 30 is mounted on the frame 10 as well. This compact loudspeaker arrangement may be installed into and removed from the head rest very easily and with little effort. Any required cables may be easily stowed within the headrest and the car seat. The loudspeaker arrangement is compatible with all different kinds and shapes of headrests and is not restricted to any specific shape or model.

The loudspeaker arrangement as described above comprises two mounting fixtures 20, 22 and two loudspeakers 40, 42. This, however, is only an example. It is generally possible that the arrangement comprises more than two mounting fixtures 20, 22 and more than two loudspeakers 40, 42, if required.

The frame 10 may include a plastic material, or a metal, for example. According to one example, the frame 10 comprises or is formed from polycarbonate. According to one example, the frame 10 may be a single piece. That is, the at least two mounting fixtures 20, 22 and the connecting element 24 may be integrally formed by using a casting or molding process, for example.

The frame 10 may have a length 110 in a first horizontal direction x, a width w10 in a second horizontal direction y, and a height h10 in the vertical direction z. According to one example, the length 110 is between 150mm and 350mm, the width w10 is between 70mm and 160mm, and the height h10 is between 25mm and 100mm.

While various embodiments of the invention have been described, it will be apparent to those of ordinary skill in the art that many more embodiments and implementations are possible within the scope of the invention. In particular, the skilled person will recognize the interchangeability of various features from different embodiments. Although these techniques and systems have been disclosed in the context of certain embodiments and examples, it will be understood that these techniques and systems may be extended beyond the specifically disclosed embodiments to other embodiments and/or uses and obvious modifications thereof.

The invention is defined in the appended claims.

The description of embodiments has been presented for purposes of illustration and description. Suitable modifications and variations to the embodiments may be performed in light of the above description or may be acquired from practicing the methods. The described arrangements are exemplary in nature, and may include additional elements and/or omit elements. As used in this application, an element recited in the singular and proceeded with the word "a" or "an" should be understood as not excluding plural of said elements, unless such exclusion is stated. Furthermore, references to "one embodiment" or "one example" of the present disclosure are not intended to be interpreted as excluding the existence of additional embodiments that also incorporate the recited features. The terms "first," "second," and "third," etc. are used merely as labels, and are not intended to impose numerical requirements or a particular positional order on their objects. The described systems are exemplary in nature, and may include additional elements and/or omit elements.

## Claims

1. A loudspeaker arrangement comprising:
a frame (10) comprising at least two mounting fixtures (20, 22) and a connecting element (24), wherein the connecting element (24) connects the at least two mounting fixtures (20, 22) to each other;
at least two loudspeakers (40, 42), wherein each of the at least two loudspeakers (40, 42) is arranged in a different one of the at least two mounting fixtures (20, 22), and
an amplifier (30) configured to amplify audio signals to be reproduced by the at least two loudspeakers (40, 42), wherein the amplifier (30) is mechanically coupled to the connecting element (24) between the at least two mounting fixtures (20, 22), wherein
the connecting element (24) is a flat connecting piece extending in a horizontal plane (x-y) between the at least two mounting fixtures (20, 22),
each of the at least two mounting fixtures (20, 22) is configured to form a casing for one of the at least two loudspeakers (40, 42),
the at least two mounting fixtures (20, 22) extend from a first side of the connecting element (24) in a vertical direction (z), and
the amplifier (30) is arranged on a second side of the connecting element (24), the second side being opposite to the first side.

2. The loudspeaker arrangement of claim 1, further comprising at least one fastening element (32) configured to secure the amplifier (30) to the connecting element (24).

3. The loudspeaker arrangement of claim 2, wherein the at least one fastening element (32) comprises at least one screw or bracket.

4. The loudspeaker arrangement of any of claims 1 to 3, further comprising at least two wiring harnesses (50, 52), each of the at least two wiring harnesses (50, 52) being configured to electrically couple one of the at least two loudspeakers (40, 42) to the amplifier (30).

5. The loudspeaker arrangement of any of the preceding claims, wherein
each of the at least two mounting fixtures (20, 22) comprises circumferential sidewalls extending from the first side of the connecting element (24) in the vertical direction (z),
each of the at least two mounting fixtures (20, 22) comprises a first opening (204, 224) on a front side of the loudspeaker arrangement on the first side of the connecting element (24), and
each of the at least two mounting fixtures (20, 22) comprises a second opening (206, 226) on a rear side of the loudspeaker arrangement on the second side of the connecting element (24).

6. The loudspeaker arrangement of claim 5, wherein
each of the at least two loudspeakers (40, 42) comprises a loudspeaker grille (404, 424), and
the first opening (204, 224) of each of the at least two mounting fixtures (20, 22) is covered by the loudspeaker grille (404, 424) of one of the at least two loudspeakers (40, 42).

7. The loudspeaker arrangement of any of the preceding claims, wherein each of the at least two mounting fixtures (20, 22) has a square, a rounded, an oval or a polygonal cross-section.

8. The loudspeaker arrangement of any of the preceding claims, wherein the at least two mounting fixtures (20, 22) and the connecting element (24) are integrally formed.

9. The loudspeaker arrangement of any of the preceding claims, wherein the at least two mounting fixtures (20, 22) and the connecting element (24) are formed using a first material, wherein the first material comprises a plastic material.

10. The loudspeaker arrangement of claim 9, wherein the first material comprises polycarbonate.

11. The loudspeaker arrangement of any of the preceding claims, having a length (110) in a first horizontal direction (x), a width (w10) in a second horizontal direction (y), and a height (h10) in the vertical direction, wherein
the length (110) is between 150mm and 350mm;
the width (w10) is between 70mm and 160mm; and
the height (h10) is between 25mm and 100mm.

## Patentansprüche

1. Lautsprecheranordnung, Folgendes umfassend:
einen Rahmen (10), umfassend mindestens zwei Montagehalterungen (20, 22) und ein Verbindungselement (24), wobei das Verbindungselement (24) die mindestens zwei Montagehalterungen (20, 22) miteinander verbindet;
mindestens zwei Lautsprecher (40, 42), wobei jeder der mindestens zwei Lautsprecher (40, 42) in einer anderen der mindestens zwei Montagehalterungen (20, 22) angeordnet ist, und
einen Verstärker (30), der konfiguriert ist, um Audiosignale zu verstärken, die durch die mindestens zwei Lautsprecher (40, 42) wiederzugeben sind, wobei der Verstärker (30) mechanisch mit dem Verbindungselement (24) zwischen den mindestens zwei Montagehalterungen (20, 22) gekoppelt ist, wobei das Verbindungselement (24) ein flaches Verbindungsstück ist,
das sich in einer horizontalen Ebene (x-y) zwischen den mindestens zwei Montagehalterungen (20, 22) erstreckt,
jede der mindestens zwei Montagehalterungen (20, 22) konfiguriert ist, um ein Gehäuse für einen der mindestens zwei Lautsprecher (40, 42) zu bilden,
sich die mindestens zwei Montagehalterungen (20, 22) von einer ersten Seite des Verbindungselements (24) in einer vertikalen Richtung (z) erstrecken und
der Verstärker (30) auf einer zweiten Seite des Verbindungselements (24) angeordnet ist, wobei die zweite Seite der ersten Seite gegenüberliegt.

2. Lautsprecheranordnung nach Anspruch 1, ferner umfassend mindestens ein Befestigungselement (32), das konfiguriert ist, um den Verstärker (30) an dem Verbindungselement (24) zu sichern.

3. Lautsprecheranordnung nach Anspruch 2, wobei das mindestens eine Befestigungselement (32) mindestens eine Schraube oder einen Halter umfasst.

4. Lautsprecheranordnung nach einem der Ansprüche 1 bis 3, ferner umfassend mindestens zwei Kabelstränge (50, 52), wobei jeder der mindestens zwei Kabelstränge (50, 52) konfiguriert ist, um einen der mindestens zwei Lautsprecher (40, 42) mit dem Verstärker (30) elektrisch zu koppeln.

5. Lautsprecheranordnung nach einem der vorhergehenden Ansprüche, wobei
jede der mindestens zwei Montagehalterungen (20, 22) umlaufende Seitenwände umfasst, die sich von der ersten Seite des Verbindungselements (24) in der vertikalen Richtung (z) erstrecken,
jede der mindestens zwei Montagehalterungen (20, 22) eine erste Öffnung (204, 224) an einer Vorderseite der Lautsprecheranordnung an der ersten Seite des Verbindungselements (24) umfasst und
jede der mindestens zwei Montagehalterungen (20, 22) eine zweite Öffnung (206, 226) an einer Rückseite der Lautsprecheranordnung an der zweiten Seite des Verbindungselements (24) umfasst.

6. Lautsprecheranordnung nach Anspruch 5, wobei
jeder der mindestens zwei Lautsprecher (40, 42) ein Lautsprechergitter (404, 424) umfasst und
die erste Öffnung (204, 224) jeder der mindestens zwei Montagehalterungen (20, 22) durch das Lautsprechergitter (404, 424) eines der mindestens zwei Lautsprecher (40, 42) abgedeckt ist.

7. Lautsprecheranordnung nach einem der vorhergehenden Ansprüche, wobei jede der mindestens zwei Montagehalterungen (20, 22) einen quadratischen, einen abgerundeten, einen ovalen oder einen polygonalen Querschnitt aufweist.

8. Lautsprecheranordnung nach einem der vorhergehenden Ansprüche, wobei die mindestens zwei Montagehalterungen (20, 22) und das Verbindungselement (24) einstückig ausgebildet sind.

9. Lautsprecheranordnung nach einem der vorhergehenden Ansprüche, wobei die mindestens zwei Montagehalterungen (20, 22) und das Verbindungselement (24) unter Verwendung eines ersten Materials ausgebildet sind, wobei das erste Material ein Kunststoffmaterial umfasst.

10. Lautsprecheranordnung nach Anspruch 9, wobei das erste Material Polycarbonat umfasst.

11. Lautsprecheranordnung nach einem der vorhergehenden Ansprüche mit einer Länge (110) in einer ersten horizontalen Richtung (x), einer Breite (w10) in einer zweiten horizontalen Richtung (y) und einer Höhe (h10) in der vertikalen Richtung, wobei
die Länge (110) zwischen 150 mm und 350 mm beträgt;
die Breite (w10) zwischen 70 mm und 160 mm beträgt; und
die Höhe (h10) zwischen 25 mm und 100 mm beträgt.

## Revendications

1. Agencement de haut-parleur comprenant :
un cadre (10) comprenant au moins deux fixations de montage (20, 22) et un élément de connexion (24), dans lequel l'élément de connexion (24) connecte les au moins deux fixations de montage (20, 22) l'une à l'autre ;
au moins deux haut-parleurs (40, 42), dans lequel chacun des au moins deux haut-parleurs (40, 42) est agencé dans une fixation différente parmi les au moins deux fixations de montage (20, 22), et
un amplificateur (30) configuré pour amplifier des signaux audio à reproduire par les au moins deux haut-parleurs (40, 42), dans lequel l'amplificateur (30) est couplé mécaniquement à l'élément de connexion (24) entre les au moins deux fixations de montage (20, 22), dans lequel
l'élément de connexion (24) est une pièce de connexion plane s'étendant dans un plan horizontal (x-y) entre les au moins deux fixations de montage (20, 22),
chacune des au moins deux fixations de montage (20, 22) est configurée pour former un boîtier pour l'un des au moins deux haut-parleurs (40, 42),
les au moins deux fixations de montage (20, 22) s'étendent à partir d'un premier côté de l'élément de connexion (24) dans une direction verticale (z), et
l'amplificateur (30) est agencé sur un second côté de l'élément de connexion (24), le second côté étant opposé au premier côté.

2. Agencement de haut-parleur selon la revendication 1, comprenant en outre au moins un élément de fixation (32) configuré pour fixer l'amplificateur (30) à l'élément de connexion (24).

3. Agencement de haut-parleur selon la revendication 2, dans lequel l'au moins un élément de fixation (32) comprend au moins une vis ou un support.

4. Agencement de haut-parleur selon l'une quelconque des revendications 1 à 3, comprenant en outre au moins deux faisceaux de câblage (50, 52), chacun desdits au moins deux faisceaux de câblage (50, 52) étant configuré pour coupler électriquement l'un des au moins deux haut-parleurs (40, 42) à l'amplificateur (30).

5. Agencement de haut-parleur selon l'une quelconque des revendications précédentes, dans lequel
chacune des au moins deux fixations de montage (20, 22) comprend des parois latérales circonférentielles s'étendant à partir du premier côté de l'élément de connexion (24) dans la direction verticale (z),
chacune des au moins deux fixations de montage (20, 22) comprend une première ouverture (204, 224) sur un côté avant de l'agencement de haut-parleur sur le premier côté de l'élément de connexion (24), et
chacun des au moins deux fixations de montage (20, 22) comprend une seconde ouverture (206, 226) sur un côté arrière de l'agencement de haut-parleur sur le second côté de l'élément de connexion (24).

6. Agencement de haut-parleur selon la revendication 5, dans lequel
chacun des au moins deux haut-parleurs (40, 42) comprend une grille de haut-parleur (404, 424), et
la première ouverture (204, 224) de chacune des au moins deux fixations de montage (20, 22) est recouverte par la grille de haut-parleur (404, 424) de l'un des au moins deux haut-parleurs (40, 42).

7. Agencement de haut-parleur selon l'une quelconque des revendications précédentes, dans lequel chacune des au moins deux fixations de montage (20, 22) a une section transversale carrée, arrondie, ovale ou polygonale.

8. Agencement de haut-parleur selon l'une quelconque des revendications précédentes, dans lequel les au moins deux fixations de montage (20, 22) et l'élément de connexion (24) sont formés d'un seul tenant.

9. Agencement de haut-parleur selon l'une quelconque des revendications précédentes, dans lequel les au moins deux fixations de montage (20, 22) et l'élément de connexion (24) sont formés à l'aide d'un premier matériau, dans lequel le premier matériau comprend une matière plastique.

10. Agencement de haut-parleur selon la revendication 9, dans lequel le premier matériau comprend du polycarbonate.

11. Agencement de haut-parleur selon l'une quelconque des revendications précédentes, ayant une longueur (110) dans une première direction horizontale (x), une largeur (w10) dans une seconde direction horizontale (y), et une hauteur (h10) dans la direction verticale, dans lequel
la longueur (110) est comprise entre 150 mm et 350 mm ;
la largeur (w10) est comprise entre 70 mm et 160 mm ; et
la hauteur (h10) est comprise entre 25 mm et 100 mm.
